(19)

Europäisches Patentamt
European Patent Office
Office européen des brevets

(11) **EP 3 767 962 A1**

(12) **EUROPEAN PATENT APPLICATION**

(43) Date of publication:
**20.01.2021 Bulletin 2021/03**

(51) Int Cl.:
***H04N 21/24*** *(2011.01)*

(21) Application number: **19187362.9**

(22) Date of filing: **19.07.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **THEO Technologies
3001 Leuven (BE)**

(72) Inventors:
• **TIELEMANS, Steven
3000 Leuven (BE)**

• **TIELEMANS, Maarten
3200 Aarschot (BE)**
• **SPEELMANS, Pieter-Jan
3290 Diest (BE)**
• **BUELENS, Mattias
1745 Opwijk (BE)**
• **PAULISSEN, Lieven
3012 Wilsele (BE)**

(74) Representative: **IP HILLS NV
Hubert Frère-Orbanlaan 329
9000 Gent (BE)**

(54) **A MEDIA CLIENT WITH ADAPTIVE BUFFER SIZE AND THE RELATED METHOD**

(57) A media client (100) configured to stream live media (1) received from a communication network (2), wherein said media client (100) comprises a playback buffer (101) configured to temporarily store said live media (1), and wherein said media client (100) is configured to adapt a size (10) of said playback buffer (101) when said media client (100) streams said live media (1).

Fig. 1

## Description

### Technical Field

The present invention generally relates to the streaming live media. More particular, the invention relates to a media client and a computer-implemented method performed by the respective media client.

### Background

File downloading is a process in which the end-user obtains the entire file for the media content before watching or listening to it. On the other hand, streaming media refers to the process of constantly delivering or obtaining media content over a communication network, such as for example the Internet, by allowing viewers to start watching media content without the need to completely download the media content beforehand. Live streaming more particularly corresponds to the delivery of media content in real-time over the Internet much as a media content providers broadcasts live media content via live signals. Streaming of digital video and/or digital audio via online streaming platforms is widely popular nowadays. It is estimated that by 2020, live streaming will account for more than 80% of all Internet traffic worldwide. A large portion of the Internet traffic today already consists of such media streamed from media services to clients, typically from a media content provider such as a Content Distribution Network, also referred to as CDN, over a communication network to a large variety of media clients, such as for example a media player comprised in a web browser, running on a PC, a tablet, a smartphone, a set-up box, a TV etc.. An end-user usually uses a media client installed on a client device to start playing the live media before the entire file has been transmitted from the streaming media provider to the client device.

End-to-end latency is critical when it comes to streaming live media, such as sports, interactive content and breaking news. End-to-end latency corresponds to the delay or the time between the moment when live content is captured and the moment when that same moment is displayed back by a media client on the display of an end-user device. One of the main contributions to the end-to-end delay is a network delay resulting from the transport of the live media over the communication network infrastructure between the media content provider and the media client.

For playback of videos, most media clients tend to keep a playback buffer aimed at handling uncertainties and variations in the communication network. This playback buffer is required to ensure video data is available when it is necessary to compensate for instabilities in loading video data, for example when it is necessary to compensate for instabilities of the communication network.

Playback conditions of the media can however change over time during the streaming of the live media. For example, a media client can decide to switch to an alternative quality for streaming the live media, requiring for example higher or lower bitrates. Alternatively, the properties of the communication network can change, for example when interferences and/or network loads are introduced from another media client. Alternatively, the type of communication network can change, for example when the communication network switches from streaming over wireless Internet to streaming via a 4G connection. Alternatively, the client device may change, for example when remote screens are connected for streaming the live media and/or when casting sessions are started. All these changes in the playback conditions can additionally coexist dynamically during the streaming of the live media by the media client. It remains a challenge for media content providers to develop media clients which take changes in the communication network into account when streaming live media.

Media content providers further constantly strive to reduce latency when streaming live media. With the playback buffer representing a significant portion of the end-to-end latency, the size of the buffer is typically kept as small as possible. However, minimizing the size of the playback buffer of a media client could trigger playback stalls at the side of an end-user of the media client when the playback buffer is depleted, which could severely impact the Quality of Experience, also know as QoE, for the end-user of the media client. In case of a playback stall for example, it is usual that a media client switches to lower quality streams by applying algorithms such as the technique of Adaptive Bitrate streaming, which results in a reduced QoE for the end-user. On the other hand, maximizing the size of the playback buffer of a media client could cause high startup times before playback and high latency, which would also significantly jeopardize the QoE for an end-user of the media client.

The above-mentioned streaming solutions still suffer from shortcomings, especially in terms of latency and QoE for an end-user of the media client when streaming live media.

### Summary

It is an objective of the present invention to disclose a media client and a computer-implemented method that overcome the above identified shortcomings of existing solutions. More particularly, it is an objective to disclose a media client and a computer-implemented method which allow the best possible user experience regardless of a playback environment and changes within this environment.

The scope of protection sought for the various embodiments of the invention is set out by the independent claims. The embodiments and features described in this specification that do not fall within the scope of the independent claims, if any, are to be interpreted as examples useful for understanding various embodiments of the invention.

The media clients described in the above-mentioned streaming solutions comprise playback buffers with fixed sizes, wherein the sizes of the buffers are fixed and pre-configured for each media client. Relying on fixed sizes for playback buffers prevents media content providers from taking changes in the communication network into account when streaming live media. Additionally, with Adaptive Bitrate streaming techniques, neither the size of a playback buffer nor an optimum size of playback buffer needed to stream live media is considered. As a result, the experience of an end-user of the media client can be greatly impacted when live media is streamed with the above-mentioned streaming solutions.

According to a first aspect of the present disclosure, the above defined objectives are realized by a media client configured to stream live media received from a communication network, wherein the media client comprises a playback buffer configured to temporarily store the live media, and wherein the media client is configured to adapt a size of the playback buffer when the media client streams the live media.

The media client according to the present disclosure measures a size of its own current playback buffer and determines what the ideal size of its own current playback buffer is for streaming the live media. In other words, the media client according to the present disclosure increases or decreases a size of its own playback buffer when necessary and when playing the live media by speeding up or slowing down playback or jumping forward in the playback when necessary. The media client therefore comprises an adaptive buffer controller which monitors and measures the current size of its own playback buffer and determines the ideal size of its own playback buffer for streaming the live media. This way, the media client according to the present disclosure can dynamically alter its behavior when necessary while streaming live media by modifying a size of its own playback buffer in function of a state of the communication network. With the media client according to the present disclosure, an optimal balance between Quality of Experience and latency is provided to an end-user of the media client. The media client according to the present disclosure provides the best possible user experience regardless of possible changes over the communication network. When the conditions of the communication network are stable, the media client according to the present disclosure provides ultra-low latency when streaming the live media with a minimized size of the playback buffer. When the conditions of the communication network are unstable, the media client according to the present disclosure further provides a playback buffer which is large enough to ensure stable playback of the live media for an end-user of the media client.

A media client according to the present disclosure is for example a video player. Alternatively, a media client according to the present disclosure is for example any type of media player software or any type of application software for playing multimedia computer files like audio and video files.

Optionally, the media client further comprises an Adaptive Rate streaming technique to not only dynamically determine the right size of the playback buffer for streaming the live media, but also to dynamically provide feedback for potential bitrate switching decisions.

The live media received by the media client is a combination of ordered still pictures or frames that are decoded or decompressed and played one after the other within the media client. To this respect, the media client, or client device, may be any device capable of receiving a digital representation of such media over a communication network and capable of decoding the representation into a sequence of frames that can be displayed on a screen to a user. Examples of media clients that are suitable as a media client are desktop and laptop computers, smartphones, tablets, setup boxes and TVs. A media client may also refer to a media player application running on any of such devices. Streaming of live media refers to the concept that the media client can request the live media from a remote media service such as for example a remote server and start the playback of the media upon receiving the first frames without having received all the frames of the compete stream of media. A streaming service is then a remote service that can provide such live media streaming upon request of the media client to the remote server over a communication network, for example over the Internet, over a Wide Area Network (WAN) or a Local Area Network (LAN).

According to an optional aspect of the disclosure, the media client is further configured to:

- monitor a live playback environment of the communication network; and
- adapt the size of the playback buffer as a function of the live playback environment.

This way, the media client can dynamically alter its behavior while streaming live media by modifying a size of its own playback buffer in function of conditions of the communication network. Monitoring a live playback environment of the communication network allows the media client to determine conditions of the communication network. When the live playback environment of the communication network is stable or favorable for streaming live media, the media client provides ultra-low latency when streaming the live media with a small size of the playback buffer. When the live playback environment of the communication network is unstable or unfavorable for streaming live media, the media client further provides a playback buffer which is large enough to ensure stable playback of the live media for an end-user of the media client. It is therefore possible to provide the best possible user experience regardless of possible changes in the live playback environment of the communication network.

According to an optional aspect of the disclosure, the live playback environment comprises one or more of the following:

- a type of the communication network;
- a throughput of the communication network;
- packet loss;
- round-trip delay time or round-trip time;
- performance of a client device on which the media client runs; and
- a latency of the live media played on the media client.

The media client monitors the live playback environment of the communication network when streaming the live media and determines an ideal size of the playback buffer for the live playback environment of the communication network. For example, the media client monitors network fluctuations in the communication network. For example, the media client monitors a type of the communication network when streaming the live media. It is possible that the communication network switches between a type of wireless communication network and a type of 3G connection or 4G connection or 5G connection communication network. The type of communication network as well as possible switches between different types greatly influences the live playback environment of the communication network. For example, a type of 3G connection usually demonstrates a higher packet loss than a type of 4G or 5G connection. A playback buffer is therefore needed to cancel the packet losses out. Also, each type of communication network has an inherent data latency. Larger sizes of playback buffers can compensate for example the higher packet losses and/or the data latency. Additionally, the media client monitors a throughput of the communication network. When the throughput is not constant but varies, the size of the playback buffer can be used to compensate the variation of the throughput. For example, a larger size of playback buffer can be necessary to compensate the variations of the throughput. Also, when for example switching between two different playback qualities, there is a build-up time during which the TCP window comprises the correct size of playback buffer. The media client further monitors performance of the client device on which the media client is implemented. For example, the media client further monitors a CPU usage of a client device on which the media client runs. The media client for example also monitors a memory usage of a client device on which the media client runs. The media client for example further monitors the number of packet losses which occur when one or more packets of data of the live media travelling across the communication network fail to reach their destination, for example the media client. Packet loss is either caused by errors in data transmission, typically across wireless networks, or by network congestion. For example, the media client further monitors a number of dropped video frames and/or of dropped audio samples, wherein the dropped video frames are video frames of the live media which could not be decoded on time by the media client. The media client for example further monitors the round-trip delay time, also referred to as RTD, and/or the round-trip time, also referred to as RTT. The media client therefore monitors and/or estimates an end-to-end latency of the live media being played on the media client and dynamically adapts the size of its own size of the playback buffer as a function of the latency of the live media being played on the media client. Additionally, frame drops, for example drops of video frames drops and/or audio samples, can occur when the time difference between the time when a video frame is placed in the playback buffer and the time when that video frame is shown on the media client is insufficient for the media client to process the video frame and/or the audio sample. This can happen more frequently for example in situations where there is high CPU load and/or high memory usage of the client device on which the media client runs. When this situation is detected by the media client, it is desired to increase the size of the playback buffer.

According to an optional aspect of the disclosure, the media client is further configured to increase, respectively decrease, the size of the playback buffer when the live playback environment exceeds one or more predetermined thresholds.

This way, by applying rules on the live playback environment in function of one or more predetermined thresholds, the media client is further configured to increase, respectively decrease, the size of the playback buffer.

For example, let's consider playing back live media with an average bandwidth of 2Mbps with the media client according to the present invention. In this scenario, it is assumed that the available network connection is larger than 2Mbps. However, due to packet losses and/or other disturbances and/or loads on the network communication degrading the live playback environment, there are regular lapses of 1 second from 2Mbps to 1 Mbps. Initially, there is an unknown initial number of seconds $b_0$ in the playback buffer of the media client. A size of the playback buffer of the media client generally increases over time $t$ according to equations (1), (2) and more particularly in this specific scenario according to equation (3):

$$size\ of\ playback\ buffer \\ = (t * worst\ case\ number\ of\ seconds\ of\ live\ media\ downloaded\ per\ second) \quad (1)$$

$$size\ of\ playback\ buffer = (t * \frac{bandwidth_{worst\ case}}{bandwidth_{live\ media}}) \quad (2)$$

$$size\ of\ playback\ buffer = (t * \frac{1Mbps}{2Mbps}) \quad (3)$$

A consumption of playback buffer over time $t$ is equal to $t$, i.e. a second of live media is played back per second by the media client. The evolution $b_t$ of the size of the playback buffer of the media client over the time $t$ is given by equation (4):

$$b_t = b_0 + \left( t * \frac{bandwidth_{worst\ case}}{bandwidth_{live\ media}} \right) - t \quad (4)$$

When the playback buffer is empty, i.e. when the size of the playback buffer $b_t$ is equal to 0, equations (5), (6), (7) and (8) can be obtained for the particular scenario presented above:

$$b_t = 0 \quad (5)$$

$$b_0 + \left( t * \frac{1Mbps}{2Mbps} \right) - t = 0 \quad (6)$$

$$b_0 + 0.5t - t = 0 \quad (7)$$

$$b_0 = 0.5t \quad (8)$$

For the scenario presented above, when a lapse lasts 1 second maximum, it is possible to prevent stalling of the playback of the live media by relying on a playback buffer with a size equal to 500 milliseconds.

For the scenario presented above, when a lapse lasts 2 seconds maximum, it is possible to prevent stalling of the playback of the live media by relying on a playback buffer with a size equal to 1000 milliseconds. On the other hand, it could then be more interesting to play the live media in a lower quality instead.

According to an optional aspect of the disclosure, the media client is further configured to play the live media at a lower playback rate, respectively at a higher playback rate, when the live playback environment exceeds one or more predetermined thresholds.

This way, the media client dynamically alters its playback behavior in real-time while streaming the live media. A playback rate is for example a frame rate when the live media comprises live video. A playback rate is for example an audio sample rate when the live media comprises live audio.

For example, the media client demonstrates a desired or acceptable end-to-end latency of 500 milliseconds. With a round trip time equal to 0, an ideal size for the playback buffer would then be 500 milliseconds. The media client typically comprises a range of sizes of the playback buffer which are acceptable, for example comprises a range of 300 milliseconds to 700 milliseconds for the playback buffer in the scenario presented here. If the size of the playback buffer increases until it is larger than 700 milliseconds, for example because of the presence of issues with the performance of a client device on which the media client runs, then the speed of the playback of the live media must be increased by the media client to reduce the size of the playback buffer. If the size of the playback buffer reduces until it is smaller than 300 milliseconds, for example in presence of a drop in the throughput of the communication network, then the speed of the playback of the live media must be reduced by the media client to increase the size of the playback buffer. When the size of the playback buffer is comprised within the range of sizes which are acceptable, i.e. in this example between 300 milliseconds to 700 milliseconds, then the speed of the playback of the live media can be set back to 1.

According to an optional aspect of the disclosure, the media client is further configured to skip one or more frames of the live media and/or to skip one or more audio samples of the live media, thereby decreasing the size of the playback buffer.

This way, the media client can reduce a size of its playback buffer. For example, when the live media comprises audio, the pitch of speech of the live media can be increased, thereby decreasing the size of the playback buffer. This happens according to the process of time stretching which changes the speed or the duration of an audio signal without affecting its pitch. Alternatively, the process of pitch scaling can be used according to which the pitch is changed without affecting the speed. Alternatively, the process of pitch shifting - which affects both pitch and speed by slowing down or speeding up the live media comprising audio - can be used.

According to an optional aspect of the disclosure, the media client is further configured to monitor how often the playback buffer is empty when playing the live media and wherein the media client is further configured to increase the size of the playback buffer when a number of times that the playback buffer is empty when playing the live media exceeds a limit threshold.

This way, the media client dynamically alters its playback behavior in real-time while streaming the live media. When the number of times during the playback of the live media that the playback buffer is empty exceeds a predetermined number of times, or limit threshold, this is an indication for the media client that the playback buffer runs empty too fast and that the size of the playback buffer is too small. The media client therefore increases the QoE of a user of the media client by increasing the size of the playback buffer, thereby preventing playback freezes or playback stalls during playback of the live media.

According to an optional aspect of the disclosure, the media client is further configured to a number of dropped frames of the live media; and the media client is further configured to increase the size of the playback buffer when the number of dropped frames of the live media exceeds a dropped frame threshold.

Dropped frames of the live media are to be understood as video frames of the live media and/or of dropped audio samples of the live media which are dropped by the media client, i.e. video frames of the live media and/or audio samples which could not be decoded on time by the media client to be played back. Frame drops, for example drops of video frames drops and/or audio samples, can occur when the time difference between the time when a video frame is placed in the playback buffer of the media client and the time when that video frame is shown on the media client is insufficient for the media client to process the video frame and/or the audio sample. This can happen more frequently for example in situations where there is high CPU load and/or high memory usage of the client device on which the media client runs. When this situation is detected by the media client, the media client increases the size of the playback buffer.

According to a second aspect of the present disclosure, there is provided a computer-implemented method for streaming live media over a communication network to a media client comprising a playback buffer configured to temporarily store the live media, wherein the method comprises the following step performed by the media client: adapting a size of the playback buffer when the media client streams the live media.

The computer-implemented method according to the present disclosure comprises the steps of measuring the current playback buffer and determining what the ideal size of the current playback buffer is for streaming live media. In other words, the method according to the present disclosure comprises the steps of increasing or decreasing a size of the playback buffer by speeding up or slowing down playback or jumping forward in the playback when necessary and when playing the live media. The method therefore comprises the steps of monitoring and measuring the current size of its own playback buffer and determines the ideal size of the playback buffer for streaming the live media. This way, the method according to the present disclosure can dynamically alter the behavior of the media client while the media client is streaming live media by modifying a size of the playback buffer in function of a state of the communication network. With the method according to the present disclosure, an optimal balance between Quality of Experience and latency is provided to an end-user of the media client. The method according to the present disclosure provides the best possible user experience regardless of possible changes over the communication network. When the conditions of the communication network are stable, the method according to the present disclosure provides ultra-low latency when streaming the live media with a small size of the playback buffer. When the conditions of the communication network are unstable, the method according to the present disclosure further provides a playback buffer which is large enough to ensure stable playback of the live media for an end-user of the media client.

According to an optional aspect of the disclosure, the method further comprises the steps of:

- monitoring a live playback environment of the communication network; and
- adapting the size of the playback buffer as a function of the live playback environment.

According to a third aspect of the disclosure, the disclosure relates to a media client comprising at least one processor and at least one memory including computer program code, the at least one memory and computer program code configured to, with the at least one processor, cause the controller to perform the method according to the second aspect of the disclosure.

According to a fourth aspect of the disclosure, the disclosure relates to a computer program product comprising computer-executable instructions for causing a media client to perform at least the method according to the second aspect of the disclosure.

According to a fifth aspect of the disclosure, the disclosure relates to a computer readable storage medium comprising computer-executable instructions for performing the method according to the second aspect of the disclosure when the program is run on a computer.

**Brief Description of the Drawings**

Fig. 1 schematically illustrates an embodiment of a media client according to the present invention.

Fig. 2 schematically illustrates an embodiment of a media client which decreases a size of its playback buffer.

Fig. 3 schematically illustrates an embodiment of a media client which increases a size of its playback buffer.

Fig. 4 schematically illustrates an embodiment of the steps of a method according to the present invention.

Fig. 5 schematically illustrates an embodiment of the steps of a method according to the present invention, wherein the media client monitors a live playback environment of the communication network.

Fig. 6 shows an example embodiment of a suitable computing system for performing one or several steps in embodiments of the invention.

**Detailed Description of Embodiment(s)**

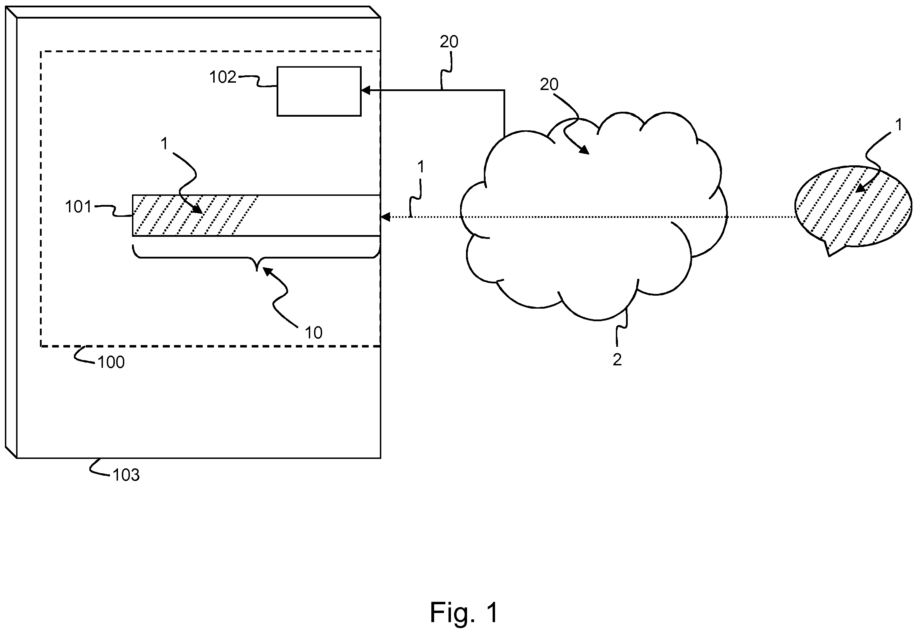

According to an embodiment shown in Fig. 1, a media client 100 is configured to stream live media 1 received over and from a communication network 2. Live media 1 for example comprises audio content and/or video content. A media client 100 according to the present disclosure is for example a video player. According to an alternative embodiment, a media client 100 according to the present disclosure is for example any type of media player software or any type of application software for playing multimedia computer files like audio and video files. The media client 100 is for example comprised in a client device 103. The client device 103 may for example be a smartphone, a tablet, a portable computer, a computer, or any other client device 103 on which the media client 100 may be installed. The communication network 2 is for example a wireless communication network, or a type of 3G connection or 4G connection or 5G connection communication network. The live media 1 is for example filmed or recorded in another physical location than the location of the media client 100. The media client 100 comprises a playback buffer 101 which is configured to store the live media 1. The media client 100 adapts a size 10 of the playback buffer 101 when the media client 100 plays the live media 1. Optionally, the media client 100 further comprises a live playback environment monitor 102 which monitors a live playback environment 20 of the communication network 2. The live playback environment 20 comprises one or more of the following: a type of the communication network 2, a throughput of the communication network 2, a number of packet loss; a round-trip delay time or round-trip time; performance of a client device 103 on which said media client 100 runs; and latency of the live media 1 played on the media client 100. The media client 100 adapts the size 10 of the playback buffer 101 as a function of the live playback environment 20. The media client 100 increases, respectively decreases, the size 10 of the playback buffer 101 when the live playback environment 20 exceeds one or more thresholds. The media client 100 plays the live media 1 at a lower playback rate, respectively a higher playback rate, when the live playback environment 20 exceeds one or more predetermined thresholds, thereby increasing, respectively decreasing the size 10 of the playback buffer 101.

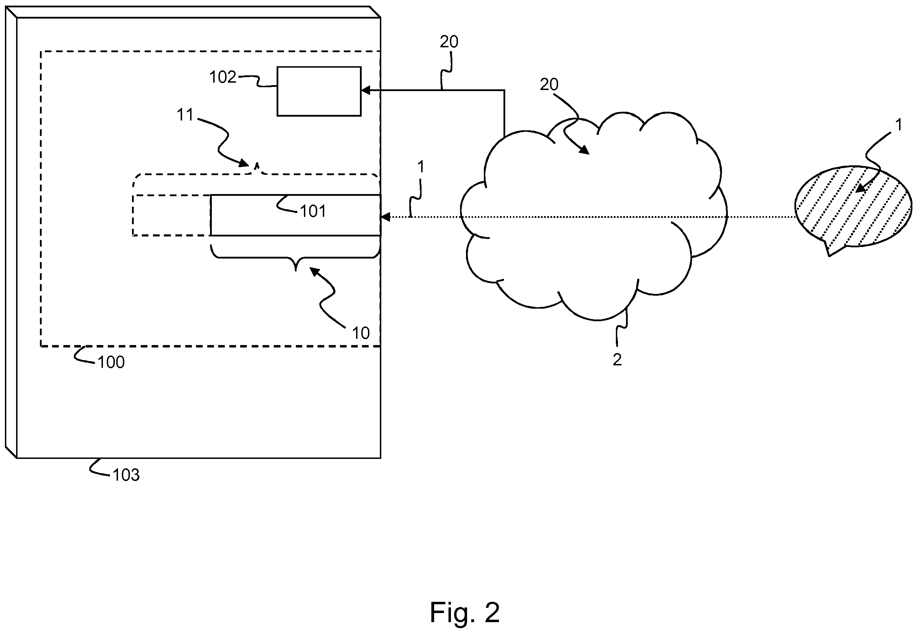

According to an embodiment shown in Fig. 2, a media client 100 is configured to stream live media 1 received over and from a communication network 2. Components having similar reference numbers than in Fig. 1 fulfill the same function. Live media 1 for example comprises audio content and/or video content. A media client 100 according to the present disclosure is for example a video player. According to an alternative embodiment, a media client 100 according to the present disclosure is for example any type of media player software or any type of application software for playing multimedia computer files like audio and video files. The media client 100 is for example comprised in a client device 103. The client device 103 may for example be a smartphone, a tablet, a portable computer, a computer, or any other client device 103 on which the media client 100 may be installed. The communication network 2 is for example a wireless communication network, or a type of 3G connection or 4G connection or 5G connection communication network. The live media 1 is for example filmed or recorded in another physical location than the location of the media client 100. The media client 100 comprises a playback buffer 101 which is configured to store the live media 1. The media client 100 adapts a size 10 of the playback buffer 101 when the media client 100 plays the live media 1. Optionally, the media client 100 further comprises a live playback environment monitor 102 which monitors a live playback environment 20 of the communication network 2. The live playback environment 20 comprises one or more of the following: a type of the communication network 2, a throughput of the communication network 2, a number of packet loss; a round-trip delay time or round-trip time; performance of a client device 103 on which said media client 100 runs; and latency of the live media 1 played on the media client 100. The media client 100 adapts the size 10 of the playback buffer 101 as a function of the live playback environment 20. The media client 100 increases, respectively decreases, the size 10 of the playback buffer 101 when the live playback environment 20 exceeds one or more thresholds. The media client 100 plays the live media 1 at a lower playback rate, respectively a higher playback rate, when the live playback environment 20 exceeds one or more predetermined thresholds, thereby increasing, respectively decreasing the size 10 of the playback buffer 101. For example, on Fig. 2, the live playback environment monitor 102 determines that the live playback environment 20 exceeds one or more predetermined thresholds and the media client adapts a size of the playback buffer 101 from the size 11 to the size 10, thereby decreasing the size 10 of the playback buffer 101. For example, the media client 100 skips one or frames of the live media 1 and/or to skip one or more audio samples of the live media 1, thereby decreasing the size of the playback buffer 101 from the size 11 to the size 10 on Fig. 2.

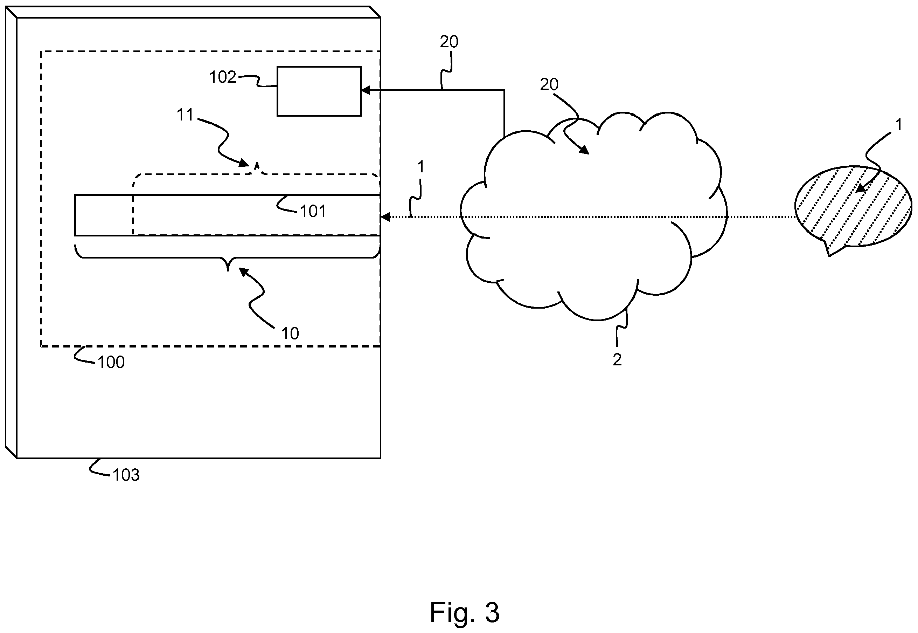

According to an embodiment shown in Fig. 3, a media client 100 is configured to stream live media 1 received over and from a communication network 2. Components having similar reference numbers than in Fig. 1 or Fig. 2 fulfill the same function. Live media 1 for example comprises audio content and/or video content. A media client 100 according to the present disclosure is for example a video player. According to an alternative embodiment, a media client 100 according to the present disclosure is for example any type of media player software or any type of application software for playing multimedia computer files like audio and video files. The media client 100 is for example comprised in a client device 103. The client device 103 may for example be a smartphone, a tablet, a portable computer, a computer, or any other client device 103 on which the media client 100 may be installed. The communication network 2 is for example a wireless communication network, or a type of 3G connection or 4G connection or 5G connection communication network. The live media 1 is for example filmed or recorded in another physical location than the location of the media client 100. The media client 100 comprises a playback buffer 101 which is configured to store the live media 1. The media client 100 adapts a size 10 of the playback buffer 101 when the media client 100 plays the live media 1. Optionally, the media client 100 further comprises a live playback environment monitor 102 which monitors a live playback environment 20 of the communication network 2. The live playback environment 20 comprises one or more of the following: a type of the communication network 2, a throughput of the communication network 2, a number of packet loss; a round-trip delay time or round-trip time; performance of a client device 103 on which said media client 100 runs; and latency of the live media 1 played on the media client 100. The media client 100 adapts the size 10 of the playback buffer 101 as a function of the live playback environment 20. The media client 100 increases, respectively decreases, the size 10 of the playback buffer 101 when the live playback environment 20 exceeds one or more thresholds. The media client 100 plays the live media 1 at a lower playback rate, respectively a higher playback rate, when the live playback environment 20 exceeds one or more predetermined thresholds, thereby increasing, respectively decreasing the size 10 of the playback buffer 101. For example, on Fig. 3, the live playback environment monitor 102 determines that the live playback environment 20 exceeds one or more predetermined thresholds and the media client adapts a size of the playback buffer 101 from the size 11 to the size 10, thereby increasing the size 10 of the playback buffer 101. For example, the media client 100 monitor how often the playback buffer 101 is empty when playing the live media 1 and the media client 100 increases the size of the playback buffer 101 from the size 11 to the size 10 when a number of times the playback buffer 101 is empty when playing the live media 1 exceeds a limit threshold, thereby increasing the size of the playback buffer 101 from the size 11 to the size 10 on Fig. 3.

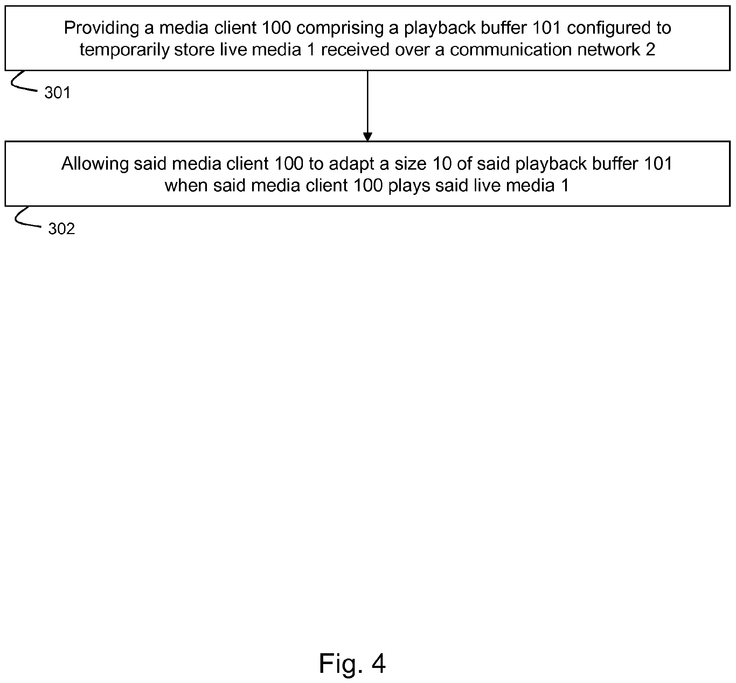

According to an embodiment of the method steps shown in Fig. 4, a method comprises a first step 301 of providing a media client 100 comprising a playback buffer 101, wherein the playback buffer 101 is configured to temporarily store live media 1 received over a communication network 2. Components having similar reference numbers than in Fig. 1 or Fig. 2 or Fig. 3 fulfill the same function. Live media 1 for example comprises audio content and/or video content. A media client 100 according to the present disclosure is for example a video player. According to an alternative embodiment, a media client 100 according to the present disclosure is for example any type of media player software or any type of application software for playing multimedia computer files like audio and video files. The media client 100 is for example comprised in a client device. The client device may for example be a smartphone, a tablet, a portable computer, a computer, or any other client device on which the media client 100 may be installed. The communication network 2 is for example a wireless communication network, or a type of 3G connection or 4G connection or 5G connection communication network. The live media 1 is for example filmed or recorded in another physical location than the location of the media client 100. In step 302 of the method of Fig. 4, the media client 100 adapts a size 10 of the playback buffer 101 when the media client 100 plays the live media 1.

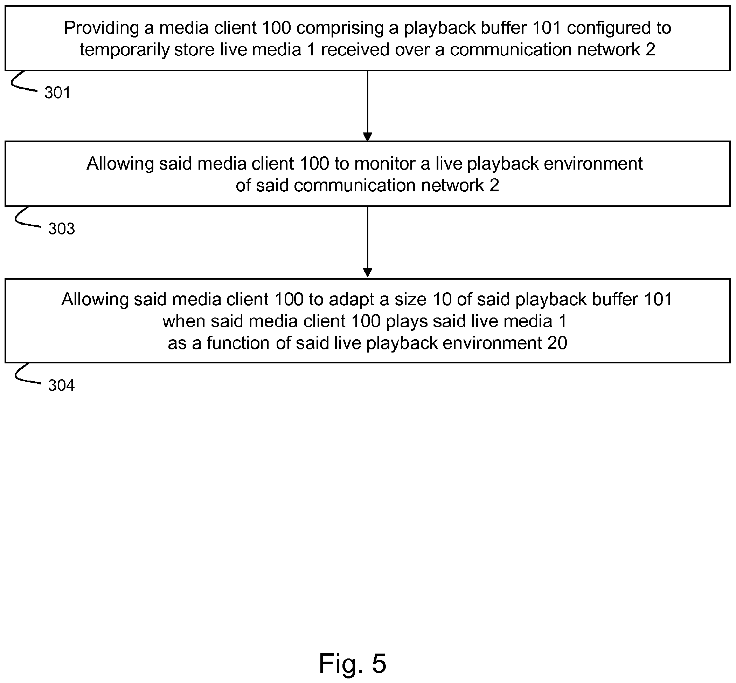

According to an embodiment of the method steps shown in Fig. 5, a method comprises a first step 301 of providing a media client 100 comprising a playback buffer 101, wherein the playback buffer 101 is configured to temporarily store live media 1 received over a communication network 2. Components having similar reference numbers than in Fig. 1 or Fig. 2 or Fig. 3 or Fig. 4 fulfill the same function. Live media 1 for example comprises audio content and/or video content. A media client 100 according to the present disclosure is for example a video player. According to an alternative embodiment, a media client 100 according to the present disclosure is for example any type of media player software or any type of application software for playing multimedia computer files like audio and video files. The media client 100 is for example comprised in a client device. The client device may for example be a smartphone, a tablet, a portable computer, a computer, or any other client device on which the media client 100 may be installed. The communication network 2 is for example a wireless communication network, or a type of 3G connection or 4G connection or 5G connection communication network. The live media 1 is for example filmed or recorded in another physical location than the location of the media client 100. In step 303 of the method of Fig. 5, the media client 100 optionally monitor a live playback environment of the communication network 2. In step 304, the media client 100 adapts a size 10 of the playback buffer 101 when the media client 100 plays the live media 1 as a function of the live playback environment 20.

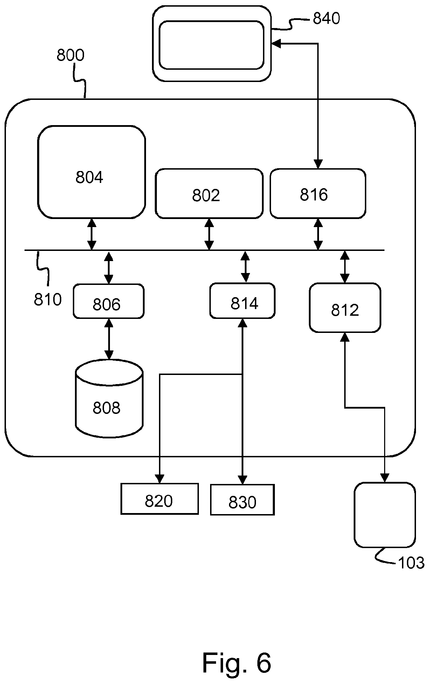

Fig. 6 shows a suitable computing system 800 enabling the performance of the described steps according to the various embodiments. Computing system 800 may in general be formed as a suitable general-purpose computer and comprise a bus 810, a processor 802, a local memory 804, one or more optional input interfaces 814, one or more optional output interfaces 816, a communication interface 812, a storage element interface 806, and one or more storage elements 808. Bus 810 may comprise one or more conductors that permit communication among the components of the computing system 800. Processor 802 may include any type of conventional processor or microprocessor that interprets and executes programming instructions. Local memory 804 may include a random-access memory (RAM) or another type of dynamic storage device that stores information and instructions for execution by processor 802 and/or a read only memory (ROM) or another type of static storage device that stores static information and instructions for use by processor 802. Input interface 814 may comprise one or more conventional mechanisms that permit an operator or user to input information to the computing device 800, such as a keyboard 820, a mouse 830, a pen, voice recognition and/or biometric mechanisms, a camera, etc. Output interface 816 may comprise one or more conventional mechanisms that output information to the operator or user, such as a display 840, etc. Communication interface 812 may comprise any transceiver-like mechanism such as for example one or more Ethernet interfaces that enables computing system 800 to communicate with other devices and/or systems, for example with other media clients 100;103. The communication interface 812 of computing system 800 may be connected to such another computing system by means of a local area network (LAN) or a wide area network (WAN) such as for example the internet. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example SATA disk drives, and control the reading and writing of data to and/or from these storage elements 808. Although the storage element(s) 808 above is/are described as a local disk, in general any other suitable computer-readable media such as a removable magnetic disk, optical storage media such as a CD or DVD, -ROM disk, solid state drives, flash memory cards, ... could be used. Computing system 500 could thus correspond to the circuitry for executing the steps of the media client 100 or 103.

As used in this application, the term "circuitry" may refer to one or more or all of the following:

> (a) hardware-only circuit implementations such as implementations in only analog and/or digital circuitry and
> (b) combinations of hardware circuits and software, such as (as applicable):

>> (i) a combination of analog and/or digital hardware circuit(s) with software/firmware and
>> (ii) any portions of hardware processor(s) with software (including digital signal processor(s)), software, and memory(ies) that work together to cause an apparatus, such as a mobile phone or server, to perform various functions) and

> (c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A media client (100) configured to stream live media (1) received from a communication network (2), wherein said media client (100) comprises a playback buffer (101) configured to temporarily store said live media (1), and wherein said media client (100) is configured to adapt a size (10) of said playback buffer (101) when said media client (100) streams said live media (1).

2. A media client (100) according to claim 1, wherein said media client (1) is further configured to:

   - monitor a live playback environment (20) of said communication network (2); and
   - adapt said size (10) of said playback buffer (101) as a function of said live playback environment (20).

3. A media client (100) according to claim 2, wherein said live playback environment (20) comprises one or more of the following:

   - a type of said communication network (2);
   - a throughput of said communication network (2);
   - packet loss;
   - round-trip delay time or round-trip time;
   - performance of a client device (103) on which said media client (100) runs; and
   - latency of said live media (1) played on said media client (100).

4. A media client (100) according to claim 2 or 3, wherein said media client (100) is further configured to increase, respectively decrease, said size (10) of said playback buffer (101) when said live playback environment (20) exceeds one or more predetermined thresholds.

5. A media client (100) according to claim 4, wherein said media client (100) is further configured to play said live media (1) at a lower playback rate, respectively at a higher playback rate, when said live playback environment (20) exceeds one or more predetermined thresholds.

6. A media client (100) according to any of the claims 4 or 5, wherein said media client (100) is further configured to skip one or more frames of said live media (1) and/or to skip one or more audio samples of said live media (1), thereby decreasing said size (10) of said playback buffer (101).

7. A media client (100) according to any of the preceding claims, wherein said media client (100) is further configured to monitor how often said playback buffer (101) is empty when playing said live media (1) and wherein said media client (100) is further configured to increase said size (10) of said playback buffer (101) when a number of times that said playback buffer (101) is empty when playing said live media (1) exceeds a limit threshold.

8. A media client (100) according to any of the preceding claims, wherein said media client (100) is further configured to monitor a number of dropped frames of said live media (1); and wherein said media client (100) is further configured to increase said size (10) of said playback buffer (101) when said number of dropped frames of said live media (1) exceeds a dropped frame threshold.

9. A computer-implemented method for streaming live media (1) over a communication network (2) to a media client (100) comprising a playback buffer (101) configured to temporarily store said live media (1), wherein said method comprises the following step performed by said media client (100): adapting a size (10) of said playback buffer (101) when said media client (100) streams said live media (1).

10. A computer-implemented method according to claim 9, wherein said method further comprises the steps of:

- monitoring a live playback environment (20) of said communication network (2); and
- adapting said size (10) of said playback buffer (101) as a function of said live playback environment (20).

11. A media client comprising at least one processor (802) and at least one memory (804) including computer program code, the at least one memory and computer program code configured to, with the at least one processor, cause the controller to perform the method according to any of claim 9 to 10.

12. A computer program product comprising computer-executable instructions for causing a media client to perform at least the method according to any of claim 9 to 10.

13. A computer readable storage medium comprising computer-executable instructions for performing the method according to any of claims 9 to 10 when the program is run on a computer.

Fig. 1

Fig. 2

Fig. 3

EP 3 767 962 A1

Providing a media client 100 comprising a playback buffer 101 configured to temporarily store live media 1 received over a communication network 2

301

Allowing said media client 100 to adapt a size 10 of said playback buffer 101 when said media client 100 plays said live media 1

302

Fig. 4

EP 3 767 962 A1

Providing a media client 100 comprising a playback buffer 101 configured to temporarily store live media 1 received over a communication network 2

301

Allowing said media client 100 to monitor a live playback environment of said communication network 2

303

Allowing said media client 100 to adapt a size 10 of said playback buffer 101 when said media client 100 plays said live media 1 as a function of said live playback environment 20

304

Fig. 5

Fig. 6

Europäisches
Patentamt

European
Patent Office

Office européen
des brevets

# EUROPEAN SEARCH REPORT

**Application Number**

EP 19 18 7362

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 525 641 B1 (GREENE KEVIN [US] ET AL) 20 December 2016 (2016-12-20) * abstract; figure 9 * | 1-13 | INV. H04N21/24 |
| X | WO 2011/038028 A2 (QUALCOMM INC [US]; LUBY MICHAEL G [US] ET AL.) 31 March 2011 (2011-03-31) * abstract * | 1-13 | |
| X | US 2017/223361 A1 (BLOMQVIST MATTIAS [SE]) 3 August 2017 (2017-08-03) * abstract; figure 10 * | 1-13 | |
| A | US 2012/177101 A1 (VAN DER SCHAAR AUKE SJOERD [US]) 12 July 2012 (2012-07-12) * abstract; figures 4,5 * | 1-13 | |
| A | WO 2017/210027 A1 (AMAZON TECH INC [US]) 7 December 2017 (2017-12-07) * abstract; figures 4,5 * | 1-13 | |
| A | US 2011/023076 A1 (PARK ANTHONY NEAL [US] ET AL) 27 January 2011 (2011-01-27) | 1-13 | TECHNICAL FIELDS SEARCHED (IPC) H04N |
| A | US 2018/262439 A1 (MOORTHY PRAVEEN N [US] ET AL) 13 September 2018 (2018-09-13) | 1-13 | |
| A | US 2005/201485 A1 (FAY LAURENT [FR]) 15 September 2005 (2005-09-15) | 1-13 | |
| A | US 2016/295254 A1 (CHEN XUEMIN [US] ET AL) 6 October 2016 (2016-10-06) | 1-13 | |
| A | WO 2018/094261 A1 (ALIBABA GROUP HOLDING LTD [US]) 24 May 2018 (2018-05-24) | 1-13 | |

The present search report has been drawn up for all claims

| Place of search | Date of completion of the search | Examiner |
|---|---|---|
| The Hague | 17 September 2019 | Giannotti, Pantaleo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 7362

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2019

| Patent document cited in search report | | Publication date | Patent family member(s) | | Publication date |
|---|---|---|---|---|---|
| US 9525641 | B1 | 20-12-2016 | NONE | | |
| WO 2011038028 | A2 | 31-03-2011 | CN | 102550034 A | 04-07-2012 |
| | | | EP | 2481194 A2 | 01-08-2012 |
| | | | JP | 5823396 B2 | 25-11-2015 |
| | | | JP | 2013505682 A | 14-02-2013 |
| | | | KR | 20120069748 A | 28-06-2012 |
| | | | US | 2011231569 A1 | 22-09-2011 |
| | | | US | 2018152498 A1 | 31-05-2018 |
| | | | WO | 2011038028 A2 | 31-03-2011 |
| US 2017223361 | A1 | 03-08-2017 | EP | 3391654 A1 | 24-10-2018 |
| | | | US | 2017223361 A1 | 03-08-2017 |
| | | | WO | 2017132434 A1 | 03-08-2017 |
| US 2012177101 | A1 | 12-07-2012 | AU | 2011353517 A1 | 25-07-2013 |
| | | | CA | 2823830 A1 | 12-07-2012 |
| | | | CN | 103348336 A | 09-10-2013 |
| | | | EP | 2661694 A1 | 13-11-2013 |
| | | | JP | 2014505425 A | 27-02-2014 |
| | | | KR | 20140047575 A | 22-04-2014 |
| | | | US | 2012177101 A1 | 12-07-2012 |
| | | | US | 2012179834 A1 | 12-07-2012 |
| | | | US | 2015296205 A1 | 15-10-2015 |
| | | | US | 2017230655 A1 | 10-08-2017 |
| | | | WO | 2012094258 A1 | 12-07-2012 |
| WO 2017210027 | A1 | 07-12-2017 | EP | 3466081 A1 | 10-04-2019 |
| | | | WO | 2017210027 A1 | 07-12-2017 |
| US 2011023076 | A1 | 27-01-2011 | BR | 112012002182 A2 | 31-05-2016 |
| | | | CA | 2768964 A1 | 27-01-2011 |
| | | | CO | 6491092 A2 | 31-07-2012 |
| | | | EP | 2457167 A1 | 30-05-2012 |
| | | | JP | 5302463 B2 | 02-10-2013 |
| | | | JP | 5652971 B2 | 14-01-2015 |
| | | | JP | 2013219819 A | 24-10-2013 |
| | | | JP | 2013500635 A | 07-01-2013 |
| | | | US | 2011023076 A1 | 27-01-2011 |
| | | | US | 2014189771 A1 | 03-07-2014 |
| | | | WO | 2011011724 A1 | 27-01-2011 |
| US 2018262439 | A1 | 13-09-2018 | US | 2018262439 A1 | 13-09-2018 |
| | | | US | 2018262813 A1 | 13-09-2018 |
| | | | WO | 2018165487 A1 | 13-09-2018 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 19 18 7362

17-09-2019

| Patent document cited in search report | Publication date | Patent family member(s) | | Publication date |
|---|---|---|---|---|
| US 2005201485 A1 | 15-09-2005 | AU | 2003225503 A1 | 02-12-2003 |
| | | CN | 1656809 A | 17-08-2005 |
| | | EP | 1510077 A2 | 02-03-2005 |
| | | JP | 2005526455 A | 02-09-2005 |
| | | KR | 20050010832 A | 28-01-2005 |
| | | US | 2005201485 A1 | 15-09-2005 |
| | | WO | 03098935 A2 | 27-11-2003 |
| US 2016295254 A1 | 06-10-2016 | US | 2016295254 A1 | 06-10-2016 |
| | | US | 2018316950 A1 | 01-11-2018 |
| WO 2018094261 A1 | 24-05-2018 | NONE | | |

EPO FORM P0459

For more details about this annex : see Official Journal of the European Patent Office, No. 12/82